# EUROPEAN PATENT APPLICATION

(11) **EP 1 338 362 A1**
(43) Date of publication of application: **27.08.2003**
(21) Application number: 03004018.2
(22) Date of filing: 24.02.2003
(51) Int. Cl.: B23B 13/12, B23B 13/02

(54) **High-performance magazine for feeding bars to automatic lathes**

(30) Priority: 26.02.2002 IT MI20020376
(71) Applicant: PIETRO CUCCHI S.p.A., 20060 Bussero (Milano) (IT)
(72) Inventor: Cucchi, Pietro, 20060 Bussero, (MI) (IT)
(74) Representative: Faraggiana, Vittorio, Dr. Ing.

(57) **Abstract**

An automatic lathe bar magazine comprises a feed channel (11) for a bar to the lathe chuck and a powered bar pusher (15) grasping with a head collet (17) the tail of a bar in the channel to cause it to run therein. The bar pusher (15) is made telescopic to have an outermost part (18) running with reduced side play in the channel (11) acting as a guide therefor and an internal part (16) with smaller diameter bearing at its head said collet (17) and growing longer on command from the outermost part to protrude from the magazine and enter the lathe. In this manner the bar being machined does not touch the channel and this greatly reduces vibrations and noise produced by the high speed rotation of the bar.

## Description

The present invention relates to a magazine for feeding bars to automatic lathes.

Bar magazines comprising a channel aligned with the inlet of the chuck of a lathe and in which the bar to be machined is made to run by means of a suitable thrust member are known. Since in general the bars being machined are very long in relation to their thickness and rotation speeds are relatively high, to seek to reduce the vibrations caused by bending of the bar being machined it is sought to support the bar continuously along its entire length. To achieve this, in the prior art there have been proposed running channels with diameter close to that of the bar and with various contrivances for damping the vibrations produced by the striking of the bar against the walls of the channel and to reduce the effects of the rubbing.

In addition, to guide the bar tail and prevent its wavering, the bar pusher which gasps the bar by the tail to move it in the channel is realized with a diameter practically equal to that of the channel. Since the bar pusher must be able to enter the chuck of the lathe, the diameter of the bar pusher and consequently of the channel is near the internal diameter of the chuck.

But in practice it is learnt that the vibrations are still there and especially with bars having a non-round cross section it is not possible to reach those rotation speeds which would be preferable for best utilization of the productivity of modern automatic lathes. In addition, with the variation in the diameter of the bars to be machined it is necessary to replace the guide channel and the bar pusher to keep play reduced.

The general purpose of the present invention is to remedy the above mentioned shortcomings by making available a magazine allowing feeding of bars of various cross sections and forms even with high rotation speeds and virtually without vibrations.

In view of this purpose it was sought to provide in accordance with the present invention an automatic lathe bar-magazine comprising a feed channel for a bar to the lathe chuck and a powered bar pusher grasping with a head collet the tail of a bar in the channel to cause it to run therein characterized in that the bar pusher is made telescopic to have an outermost part running with reduced side play in the channel acting as a guide therefor and an internal part with smaller diameter bearing at its head said collet and growing longer on command from the outermost part to protrude from the magazine and enter the lathe.

To clarify the explanation of the innovative principles of the present invention and its advantages compared with the prior art there is described below with the aid of the annexed drawings a possible embodiment thereof by way of non-limiting example applying said principles. In the drawings:
FIGS 1 to 4 show diagrammatic side elevation views of a magazine in accordance with the present invention in various operating steps,
FIG 5 shows a diagrammatic perspective view of part of a channel of the magazine,
FIG 6 shows a diagrammatic perspective view of a part of the magazine bar pusher,
FIGS 7 and 8 show side views taken across the magazine channel and showing part of the channel respectively in closed and open positions,
FIG 9 shows a partial diagrammatic perspective view of a detail of the channel part of FIG 5, and
FIG 10 shows from another angle an enlarged cross section view of a detail of FIG 9.

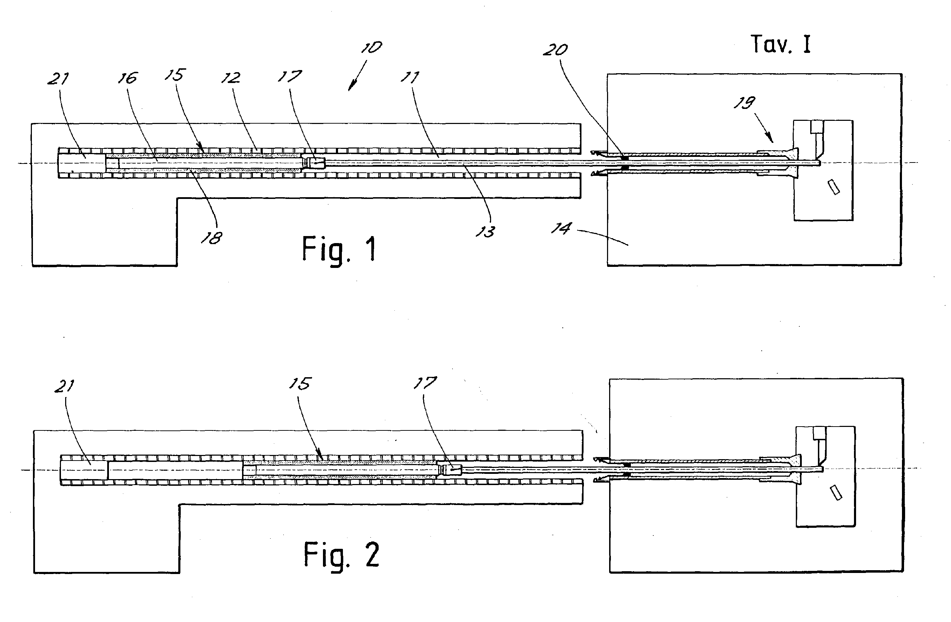

With reference to the figures, as may be seen diagrammatically in FIG 1 the basic structure of the magazine indicated as a whole by reference number 10 comprises a channel 11 made up of an aligned series of elastic members shaped generally like the letter C and facing in pairs in such a manner as to be able to raise the upper part of the channel and introduce the bar 13 to be fed to a known automatic lathe 14.

To move the bar there is a bar pusher 15 which grasps the tail of the bar and is powered to slide within the channel. Differently from known magazines, the diameter of the magazine channel is larger than the diameter of the bar in an amount such as to reduce as much as possible and if possible entirely avoid contact between the bar and the channel. The channel is consequently greater than the internal diameter of the chuck 19 of the lathe; for example, if the lathe chuck diameter is 40mm the channel may have a diameter of 60mm.

To be able to enter the lathe chuck and push the bar to the bottom of the chuck the bar pusher must of course have a diameter slightly smaller than that of the lathe chuck. To prevent the bar pusher from oscillating in the magazine channel it is made in two parts, to wit the innermost part or central rod 16 equipped with the coupling or collet 17 for the bar tail and an external tubular part 18 advantageously of plastic material, for example Vulkolan, in which the rod 16 can run with minimal play. The tubular part 18 has an outside diameter equal to that of the channel 11 and length equal to the rod 16. In this manner a telescopic bar pusher is obtained. The head chuck rotates freely with respect to the rest of the bar pusher to avoid transmitting to the bar pusher the rotation movement of the bar.

In this manner, from the beginning of feeding of the bar (FIG 1) to the end of the channel (FIG 2) the bar pusher has its central rod 16 retracted into the outer tubular part 18 and the gripping head 17 is in this manner perfectly guided in the channel. This prevents oscillation of the bar tail. When the channel ends, the tube 18 stops and only the internal rod 16 which has a diameter suitable for entering the lathe chuck 14 continues its travel as shown in FIG 2.

In the travel inside the channel of access to the lathe chuck the rod 16 of the pusher can be advantageously guided by an elastic reduction bush 20 appropriately shaped to receive the head 17 of the pusher and be moved by the pusher to the end of the path and return hooked to the head 17 to the starting position as may be seen by comparing FIGS 1-3.

When the bar is used up the bar-pusher backs to the starting position and the crop end remaining in the collet 17 is extracted by a purposeful extractor, the upper part of the channel opens raising the entire bar pusher also and a new bar is inserted in the channel for a new feed cycle.

To take the bar into the initial position of FIG 1 there is provided in accordance with the prior art a powered pre-positioner 21 which pushes the bar into the channel up to a predetermined amount after which it returns, the channel closes, the extractor inserts the bar in the collet 17 and the new machining cycle begins.

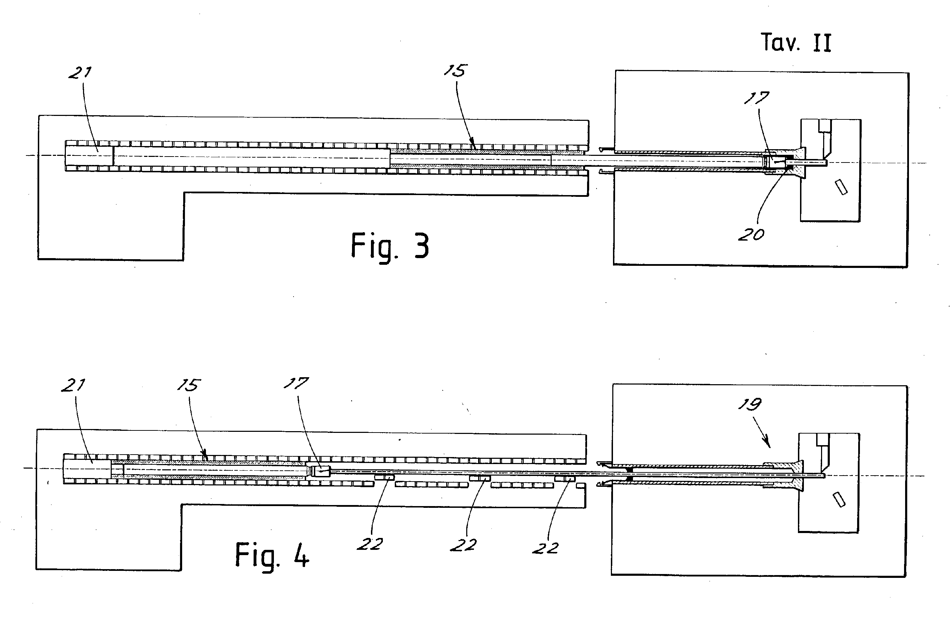

FIG 4 shows a variant for thin bars for which the support of the collet 17 alone at one end, the elastic bush 20 in an intermediate position and the chuck 19 at the other end is judged insufficient.

In accordance with this variant, when necessary the bars may be kept in axis by one or more lower portions of channel, for example three elastic sectors 22 in FIG 4, which rise to then be withdrawn when the bar pusher arrives. These supporting members also facilitate entry of the bar into the elastic reduction bush. The hoisting mechanism for the segments is readily imaginable to those skilled in the art and not further shown nor described.

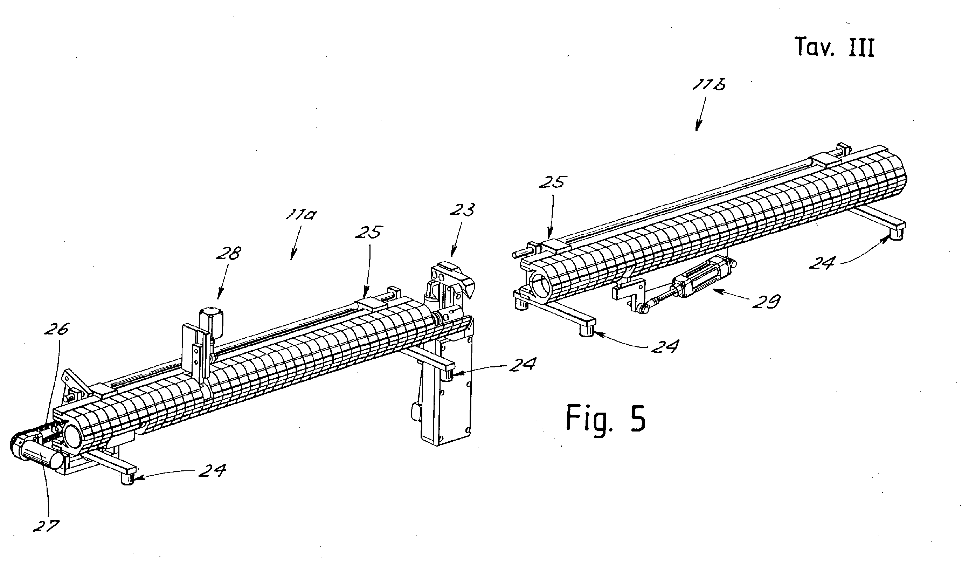

FIG 5 shows in greater detail a possible advantageous embodiment of the guide channel. As may be seen in the figure, the channel made up of lower and upper C members connected laterally by a known opening mechanism 25 is divided in two parts 11a and 11b to allow insertion of a known tong extractor 23 and falling of the bar crop end to be evacuated at cycle end. The entire channel is advantageously mounted on a frame with the interposition of pairs of vibration-proof members 24.

A chain 26 moved by a motor 27 runs along the entire channel to move the bar pusher.

Advantageously as clarified below, in the first half of the channel there is a device 28 for locking of the bar pusher in the retracted position and in the second half there is a device 29 for disengagement of the internal rod 16 from the outer tube 28 to allow telescopic lengthening within the lathe spindle.

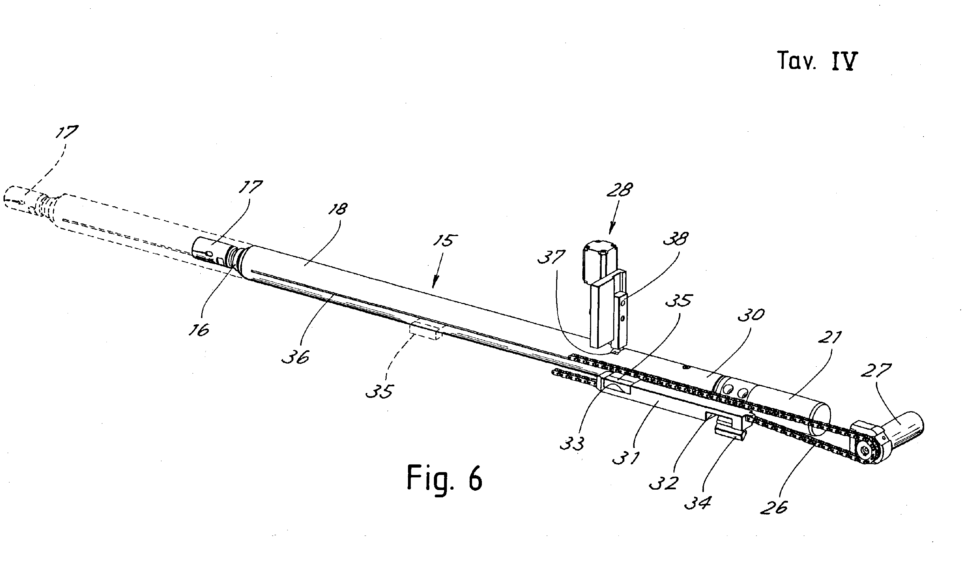

As may be seen in FIG 6, to transmit the movement of the motor 27 to the bar pusher the chain 26 drags a small block 31 having seats 32, 33 in which are engaged respective tongues 34, 35 which project radially respectively from the pre-positioner 21, which is not constrained to the bar pusher, and from the bar pusher 15.

In particular the tongue 35 is connected to the tail of the rod 16 and projects from the tube 18 to pass through a milling 36 made in the side of the tube and extending for the entire desired travel of the rod 16 in the tube 18. The extracted position of the rod 16 is shown in broken lines.

A slot 37 is made both in the tube 18 and in the rod 16 so that by operating the locking device 28 a locking insert 38 is inserted in the slot 37 to prevent running of the tube and the rod.

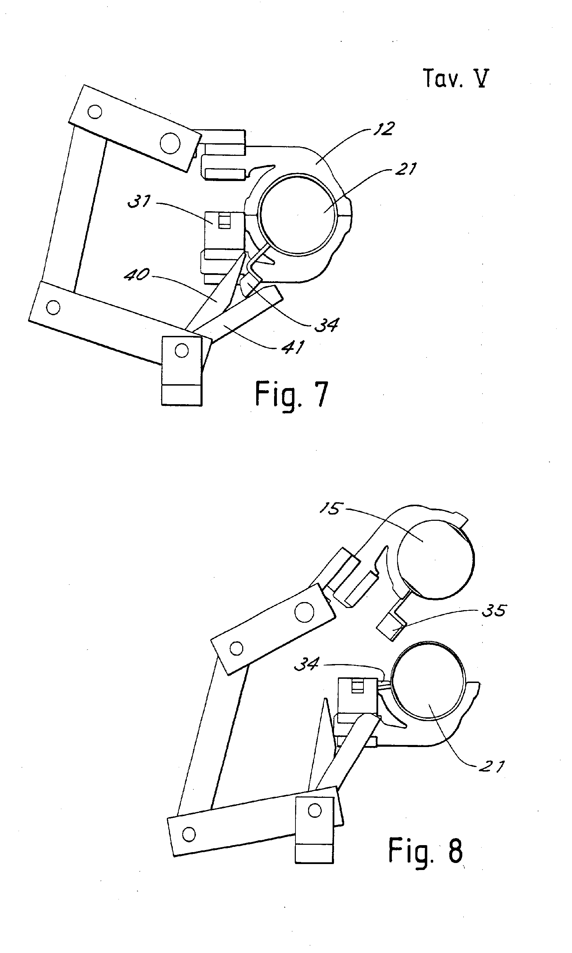

FIGS 7 and 8 show the rear part of the channel respectively in closed and open positions. As may be seen by comparing the two FIGS, two cams 40, 41 connected to the mechanism which opens the channel cause the tongue 34 and consequently the pre-positioner 21 to rotate. In the closed channel position (FIG 7) the tongue 34 is in a position disengaged from the insert 31 while the tongue 35 is engaged. When the channel is open (FIG 8) the tongue 35 is disengaged thanks to the rising of the upper part of the guide and the bar pusher while the tongue 34 is engaged with the insert by the movement of the cams 40, 41.

In this manner when the channel is open the motor 27 moves the pre-positioner 21 while when the channel is closed the motor 27 moves the bar pusher 15.

During the entire channel opening step and also when the extractor 23 operates, the locking device 28 is operated to hold the bar pusher in position.

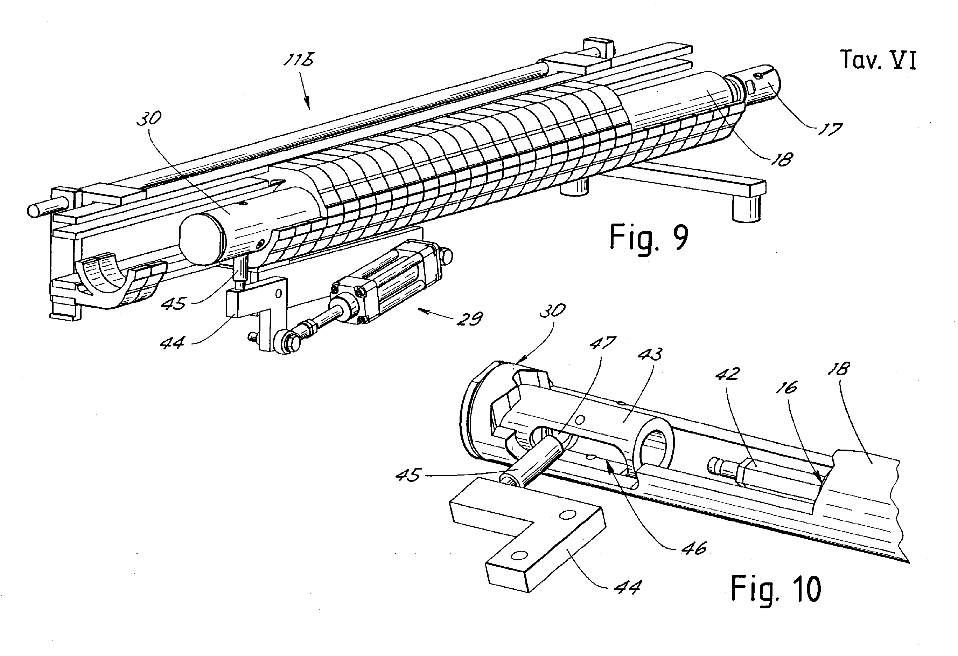

FIGS 9 and 10 show in greater detail the disengagement device 29. As may be seen in the section plane of FIG 10 the tail of the rod 16 is engaged with the rear end 30 of the outer tube 18 by means of a quick connector similar to those used in hydraulics and comprising a shaped pin 42 projecting axially from the rod 16 to be snapped into a coupling sleeve 43 fastened to the tube. During travel of the bar pusher in the magazine channel the coupling connects the rod 16 to the tube 18. When both have reached the end of the channel the tail 30 is opposite the disengagement mechanism 29 which operates through a lever 44 a pawl 45 which enters a purposeful slot 46 in the tube 18 and moves a ringnut 47 which operates the quick connect to disconnect the pin 42. At the same time the pawl 45 locks the movement of the tube in the guide.

The bar-pusher rod can then continue its travel in the lathe spindle alone as explained above. Upon its return, the pin 42 again hooks the coupling 43 and the tube and rod of the bar pusher return to the retracted rest position.

It is now clear that the predetermined purposes have been achieved by making available an innovative magazine having a telescopic bar-pusher which can be guided with minimal play in a wide bar-feeding guide though having one end with smaller diameter emerging from the magazine to be able to enter the lathe accurately.

It is noted that the manner of proceeding in accordance with the present invention is radically opposite that of the prior art. In the prior art indeed the road of leaving the least possible play between the bar and the channel is followed to arrive even at introducing lathe spindle reduction tubes and using bar pushers of diameters differing depending on the bar to be machined. While this may be somewhat useful for small diameter bars because they are flexible and hence easily contained it becomes extremely counterproductive with larger diameter bars.

With the magazine in accordance with the present invention the large-diameter bars which are more awkward as regards noise and vibrations are prevented from touching the magazine channel. The bars are held up by the lathe collet, the elastic bush and the magazine collet and rotate empty. This is all results in excellent vibration damping and less wear. As the magazine collet is quite far, in its rotation from the channel walls the elastic members making up the channel can be without the conventional metal insert typical of known single-spindle magazines with the resulting further reduction of noise. Stress on the tongues which move the bar pusher and the pre-positioner and hence these fragile parts is considerably reduced.

With the magazine in accordance with the present invention it is possible to considerably increase the number of rpms with a resulting considerable increase in production. The manufacturer's advantages are also considerable since he can produce magazines which with very few changes in the bar pusher alone can be rapidly adapted to different lathes.

It was surprisingly verified experimentally that with a magazine in accordance with the present invention even with thick-profile non-round bars, for example hexagonal bars ch. 40, no added noise is noted over that emitted by the lathe even at very high rotation speeds, for example 4000 rpm.

Naturally the above description of an embodiment applying the innovative principles of the present invention is given by way of non-limiting example of said principles within the scope of the exclusive right claimed here. For example the device which loads the bar into the channel is not shown since it can be realized by any method known to those skilled in the art.

## Claims

1. Automatic lathe bar magazine comprising a feed channel (11) for a bar to the lathe chuck and a powered bar pusher (15) grasping with a head collet (17) the tail of a bar in the channel to cause it to run therein **characterized in that** the bar pusher (15) is made telescopic to have an outermost part (18) running with reduced side play in the channel (11) acting as a guide therefor and a smaller diameter internal part (16) designed to enter the lathe which bears at its head said collet (17) and grows longer on command from the outermost part to protrude from the magazine and enter the lathe.

2. Magazine in accordance with claim 1 **characterized in that** said outermost part is in the shape of a tube (18) with the rear end which for the integral movement of the internal and external parts of the bar pusher bears a device (43) for coupling with the rear end (42) of said innermost part (16) when in retracted position in the tube with there being along the channel controlled means (29) for disengagement of said coupling device and advancement only of the internal part of the bar pusher.

3. Magazine in accordance with claim 2 **characterized in that** for movement of the bar pusher there is a powered chain (26) running parallel to the channel and bearing an insert (31) to which is constrained a tongue (35) projecting radially from the internal part (16) of the bar pusher.

4. Magazine in accordance with claim 2 **characterized in that** the means commanded for disengagement comprise an actuator (29) which pushes a pawl (45) radially into an opening (46) in the external member (18) of the bar pusher to deactivate the coupling device (43).

5. Magazine in accordance with claim 1 **characterized in that** the channel has the upper part raisable for opening of the channel and loading of a new bar therein.

6. Magazine in accordance with claims 3 and 5 **characterized in that** the bar pusher rises with the upper part of the channel to disengage said tongue (35) from the insert (31) and free the channel while at the same time engaging with the insert (31) a pre-positioner (21) which runs in the channel to perform a first advancing movement of a new bar placed in the channel to take it in front of the collet (17).

7. Magazine in accordance with claim 6 **characterized in that** along the channel extension is a device (28) for axial locking of the bar pusher in a retracted position.

8. Magazine in accordance with claim 1 **characterized in that** it is made up of a series of aligned elastic members (12) shaped generally like the letter C and appearing facing in pairs.

9. Magazine in accordance with claim 1 **characterized in that** the channel is divided in two segments (11a, 11b) between which there is a zone for unloading a bar crop end in the collet (17) with there being in said zone a device (23) for disengagement of the crop end in the collet (17) when the bar pusher is in a retracted position.

10. Magazine in accordance with claim 1 **characterized in that** it comprises an elastic reduction bush (20) to be arranged in a channel of access to the lathe spindle and that it is shaped to receive the head collet (17) of the bar pusher and be moved thereby up to the end of the path and return hooked to the head collet (17) up to the starting position to supply side guidance to the head end of the bar pusher when it enters the lathe.

11. Magazine in accordance with claim 1 **characterized in that** one or more lower portions (22) of the channel are movable to rise towards the center of the channel and constitute a support for the bar in the channel to then withdraw when the bar pusher arrives.

12. Magazine in accordance with claim 1 **characterized in that** the outer part of the bar pusher is of plastic material.
